# EUROPÄISCHE PATENTSCHRIFT

(11) **EP 2 725 242 B1**
(45) Veröffentlichungstag und Bekanntmachung des Hinweises auf die Patenterteilung: **22.08.2018**
(21) Anmeldenummer: 13005067.7
(22) Anmeldetag: 23.10.2013
(51) Int. Cl.: F16B 2/00, A44B 11/00, A01D 34/90, B05B 7/14

(54) **Tragbares Arbeitsgerät mit Gurten**
Portable work device with belts
Appareil de travail portatif doté de sangles

(30) Priorität: 26.10.2012 DE 102012021000
(43) Veröffentlichungstag der Anmeldung: 30.04.2014
(73) Patentinhaber: Andreas Stihl AG & Co. KG, 71336 Waiblingen (DE)
(72) Erfinder: Kolb, Joachim, D-71638 Ludwigsburg (DE); Reber, Volker, D-74544 Michelbach/Bilz (DE); Maier, Alexander, D-71336 Waiblingen (DE)
(74) Vertreter: Wasmuth, Rolf

(56) Entgegenhaltungen:
- DE-A1- 3 411 812
- US-A- 5 441 225
- US-A1- 2002 116 825
- US-A1- 2008 003 079

## Beschreibung

Die Erfindung betrifft ein tragbares Arbeitsgerät bestehend aus zumindest einem Gurt, einem Befestigungselement für den Gurt, einer Grundeinheit und einem Werkzeug, wobei die Grundeinheit über den Gurt von einem Benutzer getragen werden kann, nach dem Oberbegriff des Anspruchs 1.

Aus der DE 10 2004 052 649 A1 ist ein rückengetragenes Blasgerät bekannt, dessen Grundeinheit über Gurte auf dem Rücken eines Benutzers zu tragen ist. Das Werkzeug wird von dem Blasrohr gebildet, welches über eine flexible Verbindung mit dem auf dem Rücken getragenen Arbeitsgerät verbunden ist und vom Benutzer geführt wird. Aus der DE 196 16 764 C2 ist ein weiteres Arbeitsgerät bekannt, welches aus einer auf dem Rücken getragenen Antriebseinheit und einem damit über eine flexible Welle verbundenen Werkzeug besteht. Die Antriebseinheit ist als Grundeinheit auf dem Rücken eines Benutzers getragen, wozu die Grundeinheit mit flexiblen Gurten versehen ist. Aus der US 2002/0116825 A1 ist ein Freischneider mit einem rückengetragenen Antrieb bekannt, der über eine biegsame Welle einen Schneidkopf des Freischneiders antreibt. Der Antrieb ist an einer Grundplatte gehalten, die über Schultergurte auf dem Rücken eines Benutzers zu tragen ist. Die Schultergurte weisen einen gemeinsamen Befestigungsabschnitt auf, der von einem Befestigungselement durchdrungen ist, welches in der Grundplatte festgelegt ist.

Die US 2008/0003079 A1 offenbart eine Lageranordnung mit einem Ausgleichselement, wobei die Lageranordnung ein erstes Teil und ein zweites Teil miteinander verbindet. Das erste Teil hat eine Durchgangsbohrung, die deutlich größer als der Schraubbolzen des zweiten Teils ist. Dadurch kann das erste Teil relativ zum zweiten Teil ausgerichtet und so eventuell auftretende Toleranzen ausgeglichen werden. Um das erste Teil mit dem Befestigungsbolzen fest zu verbinden, ist eine Ausgleichsscheibe mit einer Eingriffsstruktur vorgesehen, welche mit einer Fixierscheibe zusammenwirkt, um ein positionsgerechtes Festlegen des ersten Teils an dem zweiten Teil zu gewährleisten.

Als tragbares Arbeitsgerät im Rahmen der Erfindung werden auch handgetragene Blasgeräte verstanden, die ergänzend über einen Gurt getragen werden, der über der Schulter eines Benutzers getragen ist.

Bei der Befestigung des Gurtes an der Grundeinheit ist der Gurt in einer für den späteren Gebrauch benötigten Ausrichtung festzulegen; beim Festschrauben des Gurtes an einer Rückenplatte der Grundeinheit kommt es in der Praxis immer wieder zu unbeabsichtigten Lageveränderungen des Gurtes relativ zur Grundeinheit, die aufwendig korrigiert werden müssen.

Der Erfindung liegt die Aufgabe zugrunde, bei einem tragbaren Arbeitsgerät der gattungsgemäßen Art eine Befestigung für einen Gurt vorzusehen, die in einfacher Weise ein lagerichtiges Festliegen eines Traggurtes an der Grundeinheit ermöglicht.

Die Aufgabe wird erfindungsgemäß nach den Merkmalen des Anspruchs 1 gelöst.

Ein Befestigungsabschnitt des am Grundkörper festzulegenden Gurtes wird zwischen einer Druckfläche eines Befestigungselementes und einer an der Grundeinheit ausgebildeten Befestigungsfläche gehalten. Die Befestigungsfläche ist mit einer reibwerterhöhenden Struktur ausgebildet, die aus einzelnen Erhebungen besteht, welche aus der Befestigungsfläche vorstehen. Die Struktur wirkt mit einer der Befestigungsfläche zugewandten Auflagefläche des Befestigungsabschnittes des Gurtes derart zusammen, dass die Erhebung der Struktur in das Material des Befestigungsabschnittes des Gurtes eingreift, wodurch der Befestigungsabschnitt und damit der Gurt an einer Drehbewegung relativ zur Grundeinheit gehindert ist.

Durch die reibwerterhöhende Struktur wird gewährleistet, dass der an der Grundeinheit in einer orientierten Lage ausgerichtete Befestigungsabschnitt des Gurtes relativ zur Grundeinheit nicht willkürlich verrutschen kann, da die Struktur der Befestigungsfläche und der Gurt miteinander in Wirkverbindung treten. Wird z. B. ein Befestigungsabschnitt durch Schrauben festgelegt, verhindert die in das Material des Befestigungsabschnittes des Gurtes eingreifende Struktur ein Mitnehmen des Befestigungsabschnittes des Gurtes in Schraubrichtung des Befestigungselementes, so dass sich die Orientierung des Gurtes beim Festlegen nicht verändert und Korrekturen der Gurtlage entfallen können. Da das Befestigungselement den Befestigungsabschnitt des Gurtes durchragt, ist auch eine formschlüssige Fixierung gegeben.

Durch die Struktur ist die Auflagefläche des Befestigungsabschnittes an der Grundeinheit erhöht. Dadurch ist die Kraftverteilung verbessert.

Die Struktur ist derart ausgebildet, dass die Erhebungen in das Material des Befestigungsabschnittes des Gurtes eingreifen. Dadurch wird eine in Schraubrichtung des Befestigungselementes quasi formschlüssige Verbindung zwischen der Struktur der Befestigungsfläche und dem festzulegenden Gurtabschnitt erzielt.

Vorteilhaft liegen die einzelnen Erhebungen mit Abstand zueinander, sind also voneinander getrennte Erhebungen. Dabei ist es vorteilhaft, wenn die Längsmittelachse einer einzelnen Erhebung etwa senkrecht zur Befestigungsfläche steht.

In Weiterbildung der Erfindung ist das freie Ende einer einzelnen, vorzugsweise zylindrischen Erhebung spitz ausgebildet, derart, dass eine Erhebung eine etwa kegelförmige oder dornenähnliche Gestalt hat. Diese dreidimensionale Gestalt einer Erhebung gewährleistet ein einfaches Eindringen in das Material des Gurtes, so dass durch einfaches Anhalten des Gurtes bei der Montage bereits ein erster Eingriff zwischen der Struktur und dem Material des Gurtes erreicht ist. Die keglige, dornenähnliche Ausbildung einer Erhebung hat ferner den Vorteil, dass die Erhebung selbst mechanisch stabil ist und bei einem aus Gewebe bestehenden Gurt die Erhebungen zwischen die Kett- und Schussfäden treten, die Fäden des Gewebes also lediglich verdrängen und nicht zerstören.

Um einen formschlüssigen, nach Art einer Verzahnung ausgebildeten Eingriff der Erhebungen in das Material des Befestigungsabschnittes des Gurtes zu erzielen, ist vorgesehen, dass die Erhebungen das Material des Gurtes durchdringen, wobei es zweckmäßig sein kann, dass die freien Enden der Erhebungen von der Druckfläche des Befestigungselementes verformt sind.

Die Struktur ist aus mehreren einzelnen Erhebungen gebildet, die zweckmäßig in einem Kreisring um eine zentrische Befestigungsöffnung angeordnet sind. Dabei kann es zweckmäßig sein, dass die Erhebungen eines ersten Kreisrings mit einem ersten Durchmesser im Bereich der Lücken der Erhebungen eines zweiten Kreisrings mit einem zweiten Durchmesser liegen.

In Draufsicht auf die Befestigungsfläche der Grundeinheit gesehen, entspricht die Größe der Druckfläche des Befestigungselementes etwa der Größe der Befestigungsfläche an der Grundeinheit. Ist die Befestigungsfläche von einem Boden einer Ansenkung gebildet, ist die Ansenkung im Durchmesser geringfügig größer ausgebildet als der Außendurchmesser der Druckfläche des Befestigungselementes selbst.

Um bei der Montage des Befestigungselementes die beim Festlegen auf den Befestigungsabschnitt des Gurtes wirkenden Mitnahmekräfte so gering als möglich zu halten, ist vorgesehen, die Druckfläche des Befestigungselementes glatt auszubilden, insbesondere eben auszubilden. Dadurch ist zwischen dem Befestigungselement und dem Gurt eine geringe Reibung gewährleistet.

Die auf der Befestigungsfläche ausgebildete Struktur besteht insbesondere aus Kunststoff, insbesondere sind die Erhebungen einteilig mit dem aus Kunststoff gefertigten Gehäuse der Grundeinheit ausgebildet. Dabei kann die Grundeinheit und die Befestigungsfläche mit der Struktur in einem einzigen Arbeitsgang hergestellt werden.

Vorteilhaft ist das Befestigungselement ein Klemmstück, welches an der Gehäuseeinheit festgelegt ist und den Befestigungsabschnitt des Gurtes überspannt. Insbesondere kann der Befestigungsabschnitt des Gurtes auch durch eine oder mehrere neben dem Gurt in die Grundeinheit eingeschraubte Befestigungsschrauben fixiert werden, wobei eine Druckfläche der Befestigungsschraube den Rand des Befestigungsabschnittes übergreift und den Befestigungsabschnitt des Gurtes auf die Struktur drückt. Dabei kann es vorteilhaft sein, wenn die Befestigungsschrauben auf ein Klemmstück wirken, welches den Befestigungsabschnitt des Gurtes überspannt und diesen auf die Struktur der Befestigungsfläche andrückt.

Das Befestigungselement ist insbesondere eine Schraube, die mit einem Gewinde in das Material der Grundeinheit eingreift. Die Schraube kann zweckmäßig durch eine Mutter gekontert sein.

Zum Festlegen des Befestigungsabschnittes des Gurtes an der Grundeinheit kann auch eine andere Ausbildung des Befestigungselementes zweckmäßig sein, z. B. die Ausbildung als Niet, Klemmelement oder dgl..

Weitere Merkmale der Erfindung ergeben sich aus den weiteren Ansprüchen, der Beschreibung und der Zeichnung, in der nachfolgend im Einzelnen beschriebene Ausführungsbeispiele der Erfindung dargestellt sind. Es zeigen:
- Fig. 1: in schematischer Ansicht ein tragbares Arbeitsgerät am Beispiel einer Akkuheckenschere,
- Fig. 2: eine Ansicht auf die Rückenplatte der Grundeinheit mit elektrischem Anschlusskabel,
- Fig. 3: eine Ansicht der Rückenplatte der Grundeinheit nach Fig. 2,
- Fig. 4: in vergrößerter Darstellung die Einzelheit IV aus Fig. 3,
- Fig. 5: eine schematische, perspektivische Darstellung der erfindungsgemäßen Befestigung,
- Fig. 6: einen Schnitt durch den schematischen Aufbau einer erfindungsgemäßen Befestigung nach Fig. 5,
- Fig. 7: einen Schnitt durch die erfindungsgemäße Befestigung nach Fig. 6 in montiertem Zustand,
- Fig. 8: in vergrößerter Darstellung die Einzelheit VIII in Fig. 7,
- Fig. 9: einen Schnitt durch die erfindungsgemäße Befestigung nach Fig. 6 in einer weiteren Ausführungsform,
- Fig. 10: eine vergrößerte Darstellung der Einzelheit X in Fig. 9,
- Fig. 11: einen Schnitt durch die erfindungsgemäße Befestigung nach Fig. 6 in einer weiteren Ausführungsform,
- Fig. 12: in vergrößerter Darstellung die Einzelheit XII in Fig. 11.

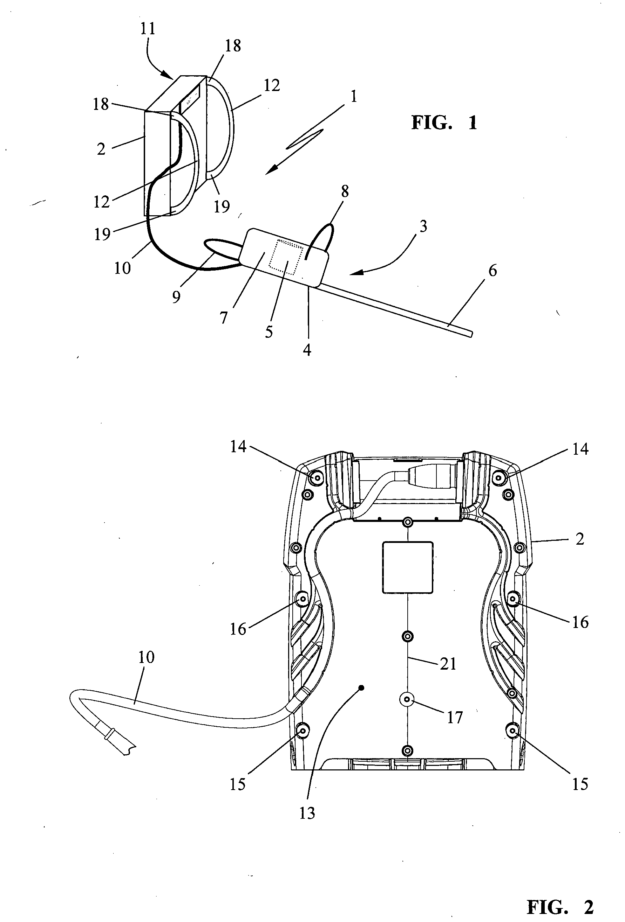

Das im Ausführungsbeispiel gezeigte Arbeitsgerät 1 besteht im Wesentlichen aus einer Grundeinheit 2 und einem Werkzeug 3. Im gezeigten Ausführungsbeispiel ist das Arbeitsgerät 1 eine elektrische Heckenschere 4 mit einem elektrischen Antriebsmotor 5, der an dem einen Ende eines Messerbalkens 6 angeordnet ist. Der Messerbalken umfasst zwei hin- und hergehende Messer. Der Antriebsmotor 5 ist in einem Gehäuse 7 montiert, das einen vorderen Handgriff 8 und einen hinteren Handgriff 9 zum Halten und Führen des tragbaren Werkzeugs 3 aufweist. Das vom Benutzer geführte Werkzeug 3 ist über eine flexible Verbindung 10 mit der Grundeinheit 2 verbunden. Bei dem in Fig. 1 gezeigten tragbaren, elektrischen Arbeitsgerät 1 besteht die flexible Verbindung 10 aus einem flexiblen elektrischen Kabel, welches die in der Grundeinheit 2 aufgenommen Akkupacks, z. B. Lithium-Ionen-Akkupacks, mit dem elektrischen Antriebsmotor 5 als elektrischen Verbraucher verbindet.

Die mit Akkupacks bestückte Grundeinheit 2 dient somit der Energieversorgung des elektrischen Antriebsmotors 5, wobei die Grundeinheit 2 als rückentragbare Baueinheit 11 ausgebildet ist, die mit Gurten 12 auf dem Rücken eines Benutzers festgelegt wird.

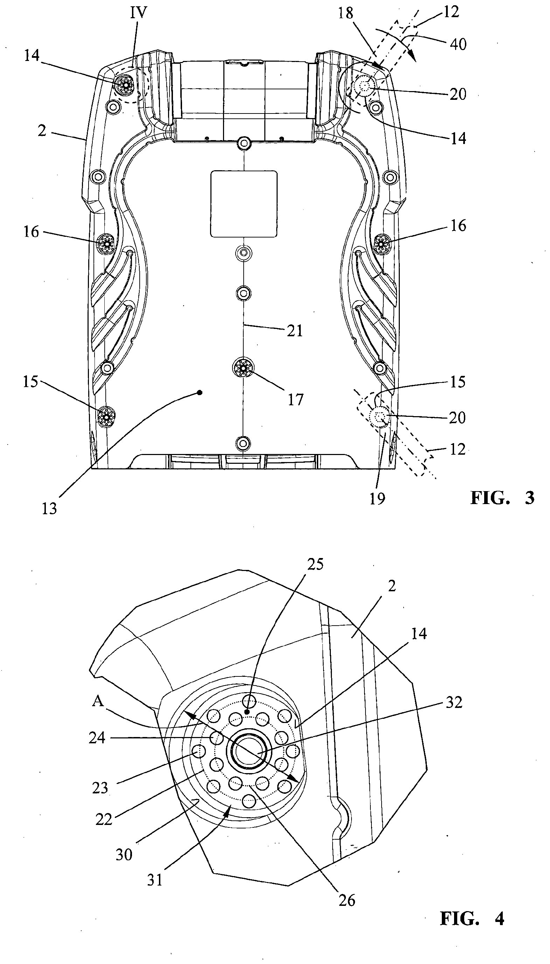

Die dem Rücken des Benutzers zugewandte Rückenplatte der Grundeinheit 2 weist obere Befestigungsflächen 14 und untere Befestigungsflächen 15 auf, auf denen - wie in Fig. 3 dargestellt - die Gurte 12 festgelegt werden. Im Ausführungsbeispiel zeigt jeder Gurt 12 einen oberen Befestigungsabschnitt 18 und einen unteren Befestigungsabschnitt 19, die von den Endabschnitten des Gurtes 12 gebildet sind und auf der oberen Befestigungsfläche 14 bzw. der unteren Befestigungsfläche 15 festgelegt sind. Wie in Fig. 3 dargestellt, ist der Befestigungsabschnitt 18, 19 durch ein Befestigungselement 20 an der Grundeinheit 2 gehalten.

Im gezeigten Ausführungsbeispiel hat die Rückenplatte 13 der Grundeinheit 2 neben den Befestigungsflächen 14 und 15 mittlere Befestigungsflächen 16, wobei die Befestigungsflächen 14, 15 und 16 an einem Längsrand der Grundeinheit 2 mit Abstand zueinander angeordnet sind. Im Ausführungsbeispiel nach Fig. 3 ist ferner eine auf der Längsmittelachse 21 der Grundeinheit 2 liegende Befestigungsfläche 17 vorgesehen, die den unteren Befestigungsflächen 15 näher liegt als den mittleren Befestigungsflächen 16. Die Längsränder der Rückenplatte 13 erstrecken sich längs der Längsmittelachse 21, vorzugsweise etwa parallel zur Längsmittelachse 21.

Wie insbesondere die Vergrößerung des Details IV in Fig. 4 zeigt, ist eine Befestigungsfläche zweckmäßig von dem Boden 31 einer Ansenkung 30 gebildet, wobei im Zentrum der Befestigungsfläche 14, also im Zentrum des Bodens 31, eine Öffnung 32 zum Eingriff eines Befestigungselementes 20 ausgebildet ist.

Auf der Befestigungsfläche 14, zweckmäßig auf dem Boden 31 der Ansenkung 30, ist eine reibwerterhöhende Struktur 25 ausgebildet, die im Ausführungsbeispiel nach Fig. 4 aus Erhebungen 23 und 24 gebildet ist, die aus der Befestigungsfläche 14 vorstehen. Wie die Draufsicht nach Fig. 4 zeigt, liegen die Erhebungen 23 und 24 jeweils auf einem Kreis 22 bzw. 26, die sich zweckmäßig konzentrisch um die zentrale Öffnung 32 erstrecken. Die Anzahl der Erhebungen 23 im äußeren Kreis 22 entspricht der Anzahl der Erhebungen 24 im inneren Kreis 26. Im gezeigten Ausführungsbeispiel sind auf einem Kreis 22, 26 acht Erhebungen angeordnet, wobei die Erhebungen 24 des inneren, im Durchmesser kleineren Kreises 26 in den Lücken zwischen den Erhebungen 23 des im Durchmesser größeren Kreises 22 liegen. Die Höhe der im Ausführungsbeispiel noppenartigen Erhebungen 23 und 24 ist geringer als die Tiefe der Ansenkung 30.

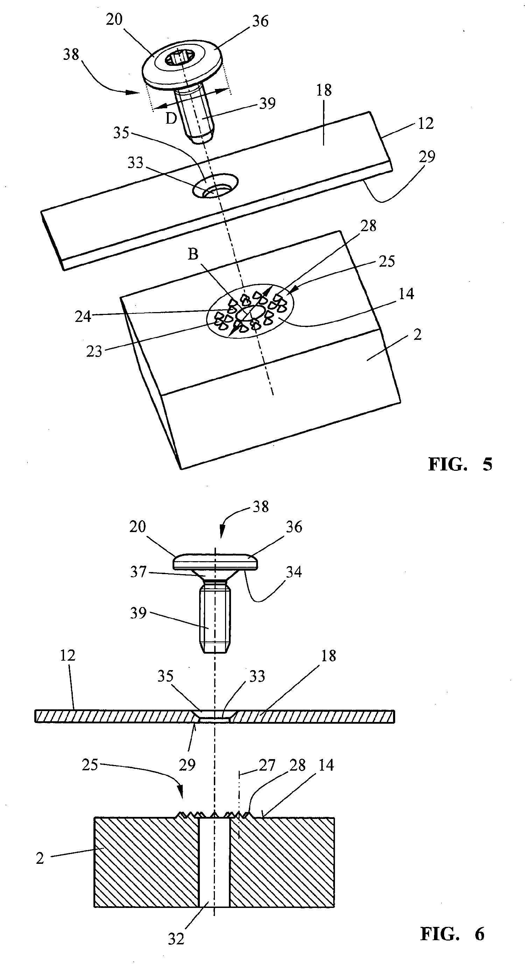

Wie schematisch in den Figuren 5 bis 7 dargestellt, wird der Befestigungsabschnitt 18 eines Gurtes 12 zwischen einer Druckfläche 34 des Befestigungselementes 20 und der an der Grundeinheit 2 ausgebildeten Befestigungsfläche festgelegt. Die Struktur 25 z. B. der Befestigungsfläche 14 ist zweckmäßig aus dem gleichen Material wie die Grundeinheit 2 gefertigt, insbesondere einteilig mit der Grundeinheit 2 ausgebildet. Die Struktur 25 ist eine dreidimensionale Struktur, die aus der Befestigungsfläche 14 vorsteht, wobei - vgl. Fig. 6 - die Längsmittelachse 27 einer Erhebung etwa senkrecht zur Befestigungsfläche 14 steht.

Wie den Figuren 5 bis 7 weiter zu entnehmen ist, ist weist eine Erhebung ein freies Ende 28 auf, das verjüngt, insbesondere spitz ausgebildet ist, derart, dass eine Erhebung 23, 24 eine etwa kegelspitzförmige oder dornenähnliche Gestalt hat. Auch andere Formen der Erhebungen können vorteilhaft sein, insbesondere in Form einer Pyramide, eines Sägezahns, eines Kegels, eines Stachels oder dgl..

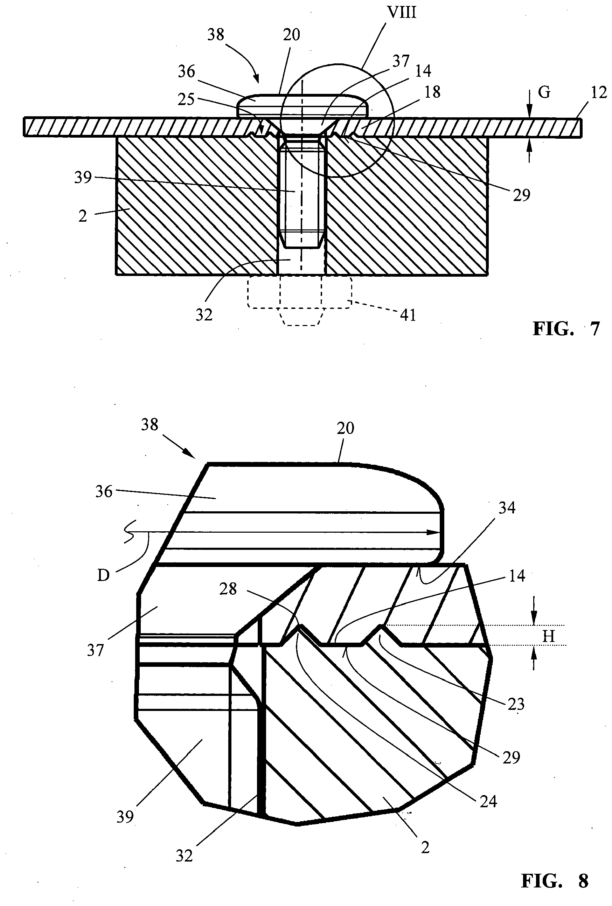

Zum Festlegen eines Befestigungsabschnittes 18 eines Gurtes 12 an der Grundeinheit 2 liegt der Befestigungsabschnitt 18 mit einer Auflagefläche 29 der Befestigungsfläche 14 zugewandt. Im gezeigten Ausführungsbeispiel nach den Figuren 6 und 7 ist im Befestigungsabschnitt 18 des Gurtes 12 eine Befestigungsöffnung 33 für ein als Schraube 38 vorgesehenes Befestigungselement 20 ausgebildet. Die Befestigungsöffnung 33 weist an ihrem dem Schraubenkopf 36 zugewandten Ende eine Ansenkung 35 auf, die mit einem konischen Kopfabschnitt 37 der Schraube 38 zusammenwirkt. Das als Schraube 38 ausgebildete Befestigungselement 20 durchragt den Befestigungsabschnitt 18 des Gurtes 12 und wird mit seinem Gewindeabschnitt 39 in die zentrale Öffnung 32 der Grundeinheit 2 eingeschraubt. Dabei wird der Befestigungsabschnitt 18 des Gurtes zwischen der Druckfläche 34 des Schraubenkopfes 36 und der Befestigungsfläche 14 der Grundeinheit 2 festgeklemmt, wobei die dreidimensionale Struktur 25 auf der Befestigungsfläche 14 vorzugsweise in das Material des Befestigungsabschnittes 18 des Gurtes 12 eindringt, wie in Fig. 7 sowie in der vergrößerten Einzelheit VIII in Fig. 8 dargestellt ist.

Wird der Befestigungsabschnitt 18 eines Gurtes 12 z. B. in einer in Fig. 3 oben rechts ausgerichteten Winkellage an der Grundeinheit 2 festgelegt, so wird beim Festschrauben des Befestigungselementes 20 im Uhrzeigersinn über die Druckfläche 34 auf den Befestigungsabschnitt 18 des Gurtes 12 ein Mitnahmemoment ausgeübt, welches in Richtung des Pfeils 40 wirkt. Da nach der Erfindung auf der Befestigungsfläche 14 eine reibwerterhöhende Struktur 25, insbesondere eine dreidimensionale Struktur 25 vorgesehen ist, die beim Anziehen des Befestigungselementes 20 in Eingriff mit der zugewandten Auflagefläche 29 des Gurtes 12 tritt, wird eine Mitnahme des Befestigungsabschnittes 18 des Gurtes 12 im Uhrzeigersinn (Pfeil 40) verhindert. Somit ist der zwischen der Druckfläche 34 des Befestigungselementes 20 und der Befestigungsfläche 14 der Grundeinheit 2 geklemmt gehaltene Befestigungsabschnitt 18 des Gurtes 12 an einer Drehbewegung in Pfeilrichtung 40 relativ zur Grundeinheit 2 gehindert.

Da die dreidimensionale Struktur der Erhebungen in das Material des Befestigungsabschnittes 18 eingreift, wird in Drehrichtung (Pfeil 40) eine Art Formschluss zwischen der Grundeinheit 2 und dem Befestigungsabschnitt 18 des Gurtes 12 erreicht, der auch nach der Montage eine Relativbewegung des Befestigungsabschnittes 18 des Gurtes 12 relativ zur Grundeinheit 2 sicher verhindert. Der Befestigungsabschnitt 14 des Gurtes 12 ist in seiner montierten Lage an der Grundeinheit 2 sicher fixiert; auch bei der Montage selbst ist gewährleistet, dass beim Festziehen des als Schraube 38 ausgebildeten Befestigungselementes 20 eine Mitnahme des Befestigungsabschnittes 18 des Gurtes 12 in Drehrichtung der Schraube 38 sicher verhindert ist. Die vor dem Festschrauben vom Benutzer gewählte Montagelage ändert sich beim Festziehen der Schraube 38 nicht. Die Struktur auf der Befestigungsfläche 14 der Grundeinheit 2 sichert die ausgerichtete Lage des Befestigungsabschnittes 18 des Gurtes 12 sowohl bei der Montage als auch im späteren Gebrauch des tragbaren Arbeitsgerätes 1.

In dem in den Figuren 7 und 8 gezeigten ersten Ausführungsbeispiel ist die Höhe H der Erhebungen 23 und 24 geringer als die Dicke G des Befestigungsabschnittes 18 des Gurtes 12. Im gezeigten Ausführungsbeispiel nach Fig. 8 entspricht die Höhe H der Erhebungen 23 und 24 etwa 20% bis 30% der Dicke G des Gurtes 12, insbesondere etwa 25% der Dicke G des Gurtes 12.

Der Gurt 12 selbst ist vorteilhaft aus einem Gewebe gebildet, in das sich die Erhebungen 23 und 24 beim Anziehen der Schraube 38 eingraben, die Erhebungen 23 und 24 also in das Material des Befestigungsabschnittes eindringen. Dadurch kann - in der Ebene des Befestigungsabschnittes - eine Art Formschluss zwischen der Grundeinheit 2 und dem Befestigungsabschnitt 18 des Gurtes 12 erzielt werden.

Wie in Fig. 8 ferner zu erkennen, entspricht der Durchmesser B (Fig. 5) der Befestigungsfläche 14 etwa dem Außendurchmesser D des Schraubenkopfes 36 bzw. der Druckfläche 34. Ist - wie Fig. 4 zeigt - eine Ansenkung 30 ausgebildet, wird der Innendurchmesser A der Ansenkung 30 insbesondere geringfügig größer als der Außendurchmesser D der Druckfläche 34 des Befestigungselementes 20 ausgebildet.

Aus der vergrößerten Darstellung in Fig. 8 wird auch deutlich, dass die Druckfläche 34 des Befestigungselementes 20 glatt ausgebildet ist, d. h. eben ausgebildet ist, damit beim Anziehen des als Schraube 38 ausgebildeten Befestigungselementes 20 im Uhrzeigersinn gemäß Fig. 3 ein nur geringer Reibwert zwischen dem Material des Gurtes 12 und der Druckfläche 34 gegeben ist. Dadurch wird erreicht, dass beim Festziehen nur geringe in Pfeilrichtung 40 wirkende Verstellkräfte auf den Befestigungsabschnitt 18 des Gurtes 12 wirken.

Es kann - wie in Fig. 7 gezeigt - zweckmäßig sein, das als Schraube 38 ausgebildete Befestigungselement 20 durch eine Mutter 41 zu kontern, um eine vibrationsfeste Fixierung des Gurtes 12 an der Grundeinheit 2 sicherzustellen. Dadurch kann die Stabilität erhöht werden und/oder auf ein Gewinde in der Öffnung 32 der Grundeinheit 2 verzichtet werden. Die Fixierung des Befestigungsabschnittes 18 auf der Struktur 25 der Befestigungsfläche 14 kann durch eine Durchsteckschraube gewährleistet werden.

Als Befestigungselement 20 kann neben einer Schraube 38 auch ein Niet, ein Klemmelement oder dgl. vorgesehen sein.

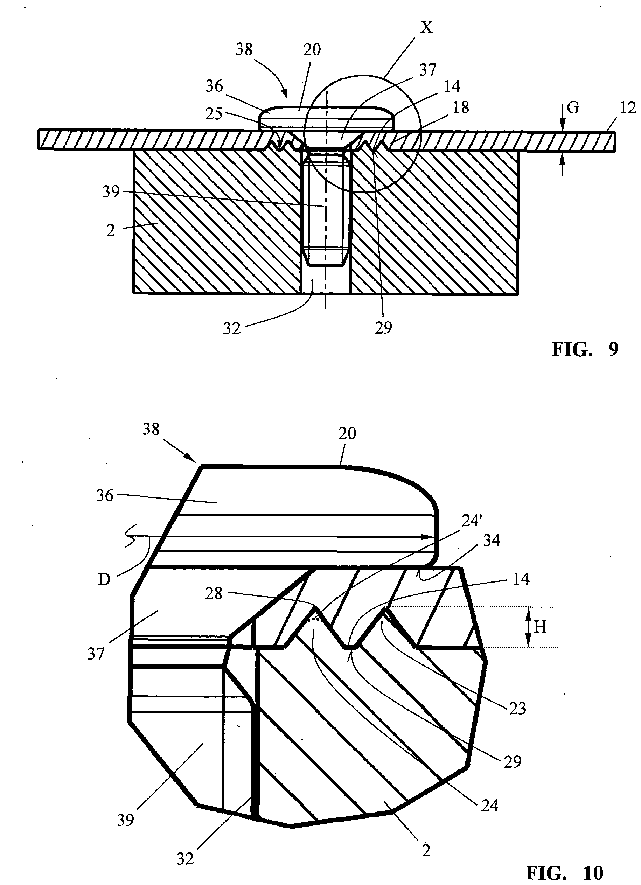

Das Ausführungsbeispiel nach den Figuren 9 und 10 entspricht im Grundaufbau dem nach den Figuren 7 und 8, weshalb für gleiche Teile gleiche Bezugszeichen verwendet sind.

In Abweichung von dem Ausführungsbeispiel nach den Figuren 7 und 8 ist im Ausführungsbeispiel nach den Figuren 9 und 10 die Höhe H der Erhebungen 23, 24 deutlich größer ausgebildet; wie in Fig. 10 gezeigt, entspricht die Höhe H etwa 40% bis 60% der Dicke G des Gurtes 12, insbesondere 50% der Dicke G des Gurtes 12.

Die Erhebungen 23 und 24 auf der Befestigungsfläche 14 dringen beim Anziehen des als Schraube 38 ausgebildeten Befestigungselementes 20 tief ins Material des Gurtes 12 ein, wobei die Erhebungen 23 und 24 das Material des Gurtes nicht zerstören, sondern - z. B. bei einem gewebten Gurt - die Kett- und Schussfäden eines Gurtes verdrängen und in die Lücken des Gewebes eindringen. Dadurch ist gewährleistet, dass eine Schwächung des Befestigungsabschnittes 18 des Gurtes 12 im Bereich des Schraubenkopfes 36 weitgehend verhindert ist, so dass einem Ausreißen des Gurtes im Bereich des Befestigungselementes 20 entgegengewirkt ist, da die Kräfte auf eine größere Fläche verteilt sind.

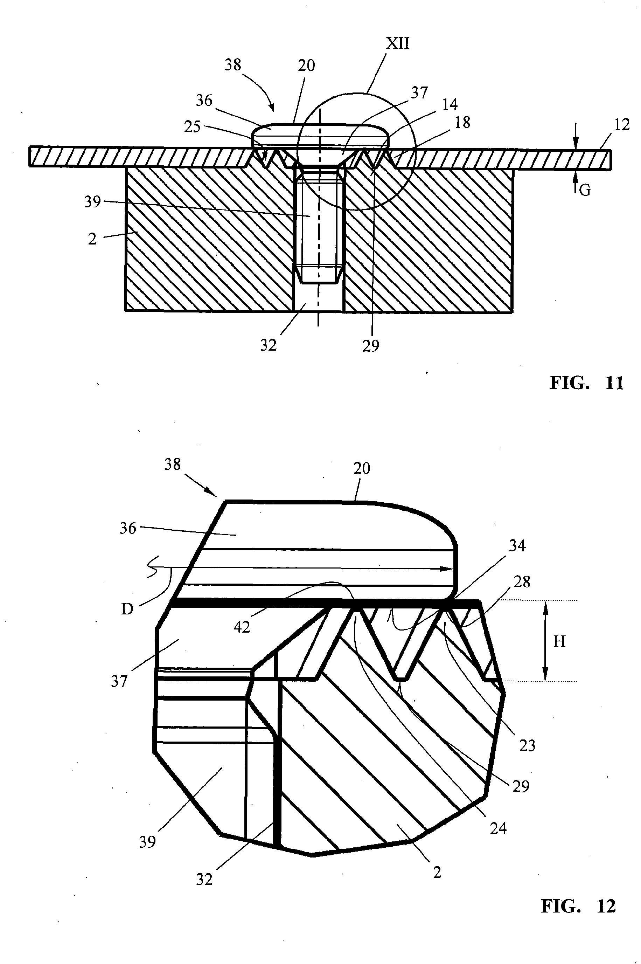

Das Ausführungsbeispiel nach den Figuren 11 und 12 entspricht im Grundaufbau dem nach den Figuren 7 und 8, weshalb für gleiche Teile gleiche Bezugszeichen verwendet sind.

Im Ausführungsbeispiel nach den Figuren 11 und 12 ist die Höhe H der Erhebungen 23 und 24 etwa gleich der Dicke G des Gurtes 12 gewählt, insbesondere geringfügig größer. Die Höhe H der Erhebungen 23 und 24 kann z. B. 95% bis 105% der Dicke G betragen; zweckmäßig beträgt die Höhe H 100% der Dicke G des Gurtes 12.

Wird das als Schraube 38 ausgebildete Befestigungselement 20 in die Grundeinheit 2 eingeschraubt, wobei das Gewinde des Gewindeabschnittes 39 in das Material der Grundeinheit 2 eingreift, durchdringen die Erhebungen 23 und 24 das Material des Gurtes 12 vollständig und liegen an der Druckfläche 34 des Schraubenkopfes 36 an. Beim Festziehen der Schraube 38 werden die Spitzen 42 der freien Enden 28 der Erhebungen 23 und 24 verformt, im gezeigten Ausführungsbeispiel nach Fig. 12 platt gedrückt. Die Befestigungskräfte der Schraube 38 auf den Befestigungsabschnitt 18 des Gurtes 12 werden somit begrenzt; die Druckfläche 34 des Befestigungselementes 20 sitzt auf der dreidimensionalen Struktur 25 der Grundeinheit 2 auf.

In Weiterbildung der Erfindung kann vorgesehen sein, das freie Ende 28 einer Erhebung 24 zu runden, so dass die Erhebung die Form eines Noppens 24' aufweist, wie in Fig. 10 strichliert angedeutet ist. Der Noppen 24' drückt sich mit seinem gerundeten Ende 28 in das Material des Befestigungsabschnittes 18 des Gurtes 12 ein, ohne das Material zu verletzen; das Material des Gurtes 12 wird von dem Noppen 24' verdichtet oder verdrängt. Dabei kann es zweckmäßig sein, dass sich die Erhebung selbst verformt. Eine derartige Ausbildung einer sich in das Material des Gurtes 12 eindrückenden, noppenförmigen oder warzenförmigen Erhebung ist z. B. bei Kunststoffgurten oder Ledergurten vorteilhaft.

## Patentansprüche

1. Tragbares Arbeitsgerät, bestehend aus zumindest einem Gurt (12), einem Befestigungselement (18, 19) für den Gurt (12), einer Grundeinheit (2) und einem Werkzeug (3), wobei die Grundeinheit (2) über den Gurt (12) von einem Benutzer getragen werden kann, und der Gurt (12) zumindest einen Befestigungsabschnitt (18, 19) aufweist, der über das Befestigungselement (20) an der Grundeinheit (2) festgelegt ist, wobei das Befestigungselement (20) den Befestigungsabschnitt (18, 19) des Gurtes (12) durchragt und der Befestigungsabschnitt (18, 19) des Gurtes (12) zwischen einer Druckfläche (34) des Befestigungselementes (20) und einer an der Grundeinheit (2) ausgebildeten Befestigungsfläche (14, 15, 16, 17) gehalten ist,
**dadurch gekennzeichnet, dass** die Befestigungsfläche (14, 15, 16, 17) mit einer reibwerterhöhenden Struktur (25) ausgebildet ist, dass die Struktur (25) aus einzelnen Erhebungen (23, 24) gebildet ist, die aus der Befestigungsfläche (14, 15, 16, 17) vorstehen und die Struktur (25) mit einer der Befestigungsfläche (14, 15, 16, 17) zugewandten Auflagefläche (29) des Befestigungsabschnittes (18, 19) des Gurtes (12) derart zusammenwirkt, dass die Erhebung (23, 24) der Struktur (25) in das Material des Befestigungsabschnittes (18, 19) des Gurtes (12) eingreift und der zwischen der Druckfläche (34) des Befestigungselementes (20) und der Befestigungsfläche (14, 15, 16, 17) der Grundeinheit (2) geklemmt gehaltene Befestigungsabschnitt (18, 19) des Gurtes (12) an einer Drehbewegung relativ zur Grundeinheit (2) gehindert ist.

2. Arbeitsgerät nach Anspruch 1,
**dadurch gekennzeichnet, dass** die Längsmittelachse (27) einer Erhebung (23, 24) etwa senkrecht zur Befestigungsfläche (14) steht.

3. Arbeitsgerät nach Anspruch 1,
**dadurch gekennzeichnet, dass** eine Erhebung (23, 24) ein freies Ende (28) aufweist und das freie Ende (28) spitz ausgebildet ist, derart, dass eine einzelne Erhebung (23, 24) eine dornenähnliche Gestalt hat.

4. Arbeitsgerät nach Anspruch 1,
**dadurch gekennzeichnet, dass** die Erhebung (23, 24) das Material des Befestigungsabschnittes (18, 19) des Gurtes (12) durchdringt.

5. Arbeitsgerät nach Anspruch 1,
**dadurch gekennzeichnet, dass** eine Erhebung (23, 24) ein freies Ende (28) aufweist und das freie Ende (28) von der Druckfläche (34) des Befestigungselementes (20) verformt ist.

6. Arbeitsgerät nach Anspruch 1,
**dadurch gekennzeichnet, dass** mehrere Erhebungen (23, 24) in einem Kreis (22, 26) um eine zentrische Befestigungsöffnung (33) angeordnet sind.

7. Arbeitsgerät nach Anspruch 1,
**dadurch gekennzeichnet, dass** die Befestigungsfläche (14, 15, 16, 17) in Draufsicht gesehen etwa die Größe der Druckfläche (34) des Befestigungselementes (20) hat.

8. Arbeitsgerät nach Anspruch 1,
**dadurch gekennzeichnet, dass** die Befestigungsfläche (14, 15, 16, 17) von einem Boden (31) einer Ansenkung (30) gebildet ist, deren Durchmesser (A) geringfügig größer als der Außendurchmesser (D) der Druckfläche (34) des Befestigungselementes (20) ist.

9. Arbeitsgerät nach Anspruch 1,
**dadurch gekennzeichnet, dass** die Druckfläche (34) des Befestigungselementes (20) glatt ausgebildet ist.

10. Arbeitsgerät nach Anspruch 1,
**dadurch gekennzeichnet, dass** die Erhebungen (23, 24) einteilig mit dem aus Kunststoff gefertigten Gehäuse der Grundeinheit (2) ausgebildet sind.

11. Arbeitsgerät nach Anspruch 1, **dadurch gekennzeichnet, dass** das Befestigungselement (20) eine Schraube (38) ist, die mit einem Gewindeabschnitt (39) in das Material der Grundeinheit (2) eingreift.

12. Arbeitsgerät nach Anspruch 1, **dadurch gekennzeichnet, dass** das Befestigungselement (20) ein Niet ist.

## Claims

1. Portable working implement consisting of at least one belt (12), a fastening element (18, 19) for the belt (12), a base unit (2) and a tool (3), wherein the base unit (2) can be carried by a user by way of the belt (12) and the belt (12) has at least one fastening section (18, 19) fixed to the base unit (2) by way of the fastening element (20), wherein the fastening element (20) extends through the fastening section (18, 19) of the belt (12) and the fastening section (18, 19) of the belt (12) is held between a pressure surface (34) of the fastening element (20) and a fastening surface (14, 15, 16, 17) formed on the base unit (2), **characterised in that** the fastening surface (14, 15, 16, 17) is designed with a friction coefficient-increasing structure (25), **in that** the structure (25) is formed from individual raised areas (23, 24) projecting from the fastening surface (14, 15, 16, 17), and **in that** the structure (25) acts together with a contact surface (29) - facing the fastening surface (14, 15, 16, 17) - of the fastening section (18, 19) of the belt (12) in such a way that the raised area (23, 24) of the structure (25) engages with the material of the fastening section (18, 19) of the belt (12) and the fastening section (18, 19) of the belt (12), clamped between the pressure surface (34) of the fastening element (20) and the fastening surface (14, 15, 16, 17) formed on the base unit (2), is prevented from performing a rotary movement relative to the base unit (2).

2. Working implement according to claims 1,
**characterised in that** the longitudinal central axis (27) of a raised area (23, 24) is approximately perpendicular to the fastening surface (14).

3. Working implement according to claims 1,
**characterised in that** a raised area (23, 24) has a free end (28), and **in that** the free end (28) is pointed in such a way that an individual raised area (23, 24) has a thorn-like shape.

4. Working implement according to claims 1,
**characterised in that** the raised area (23, 24) penetrates the material of the fastening section (18, 19) of the belt (12).

5. Working implement according to claims 1,
**characterised in that** a raised area (23, 24) has a free end (28), and **in that** the free end (28) is deformed by the pressure surface (34) of the fastening element (20).

6. Working implement according to claims 1,
**characterised in that** several raised areas (23, 24) are arranged in a circle (22, 26) around a central fastening opening (33).

7. Working implement according to claims 1,
**characterised in that** the fastening surface (14, 15, 16, 17) has approximately the size of the pressure surface (34) of the fastening element (20) if viewed from above.

8. Working implement according to claims 1,
**characterised in that** the fastening surface (14, 15, 16, 17) is represented by a base (31) of a countersink (30), the diameter (A) of which is slightly larger than the outer diameter (D) of the pressure surface (34) of the fastening element (20).

9. Working implement according to claim 1,
**characterised in that** the pressure surface (34) of the fastening element (20) is designed to be smooth.

10. Working implement according to claim 1,
**characterised in that** the raised areas (23, 24) are formed integrally with the housing of the base unit (2), which is made of plastic.

11. Working implement according to claim 1,
**characterised in that** the fastening element (20) is a screw (38), which engages with the material of the base unit (2) by way of a threaded section (39).

12. Working implement according to claim 1,
**characterised in that** the fastening element (20) is a rivet.

## Revendications

1. Appareil de travail portatif composé d'au moins une sangle (12), d'un élément de fixation (18, 19) pour la sangle (12), d'une unité de base (2) et d'un outil (3), l'unité de base (2) pouvant être portée par un utilisateur grâce à la sangle (12), et ladite sangle (12) présentant au moins une section de fixation (18, 19) qui est fixée à l'unité de base (2) grâce à l'élément de fixation (20), l'élément de fixation (20) traversant la section de fixation (18, 19) de la sangle (12), et ladite section de fixation (18, 19) de la sangle (12) étant retenue entre une surface de pression (34) de l'élément de fixation (20) et une surface de fixation (14, 15, 16, 17) formée sur l'unité de base (2),
**caractérisé en ce que** la surface de fixation (14, 15, 16, 17) est pourvue d'une structure augmentant le coefficient de frottement (25), **en ce que** la structure (25) est formée de saillies individuelles (23, 24) qui dépassent de la surface de fixation (14, 15, 16, 17), et la structure (25) coopère avec une surface (29), tournée vers la surface de fixation (14, 15, 16, 17), de la section de fixation (18, 19) de la sangle (12), de telle sorte que la saillie (23, 24) de la structure (25) pénètre dans le matériau de la section de fixation (18, 19) de la sangle (12) et que ladite section de fixation (18, 19) de la sangle (12), retenue par serrage entre la surface de pression (34) de l'élément de fixation (20) et la surface de fixation (14, 15, 16, 17) de l'unité de base (2), soit empêchée de tourner par rapport à l'unité de base (2).

2. Appareil de travail selon la revendication 1,
**caractérisé en ce que** l'axe longitudinal médian (27) d'une saillie (23, 24) est à peu près perpendiculaire à la surface de fixation (14).

3. Appareil de travail selon la revendication 1,
**caractérisé en ce qu'**une saillie (23, 24) présente une extrémité libre (28), et l'extrémité libre (28) a une forme pointue, de telle sorte qu'une saillie individuelle (23, 24) a la forme d'une épine.

4. Appareil de travail selon la revendication 1,
**caractérisé en ce que** la saillie (23, 24) traverse le matériau de la section de fixation (18, 19) de la sangle (12).

5. Appareil de travail selon la revendication 1,
**caractérisé en ce qu'**une saillie (23, 24) présente une extrémité libre (28), et l'extrémité libre (28) est déformée par la surface de pression (34) de l'élément de fixation (20).

6. Appareil de travail selon la revendication 1,
**caractérisé en ce que** plusieurs saillies (23, 24) sont disposées sur un cercle (22, 26) autour d'une ouverture de fixation centrale (33).

7. Appareil de travail selon la revendication 1,
**caractérisé en ce que** la surface de fixation (14, 15, 16, 17), vue en plan, a à peu près la taille de la surface de pression (34) de l'élément de fixation (20).

8. Appareil de travail selon la revendication 1,
**caractérisé en ce que** la surface de fixation (14, 15, 16, 17) est formée par le fond (31) d'une fraisure (30) dont le diamètre (A) est légèrement plus grand que le diamètre extérieur (D) de la surface de pression (34) de l'élément de fixation (20).

9. Appareil de travail selon la revendication 1,
**caractérisé en ce que** la surface de pression (34) de l'élément de fixation (20) est lisse.

10. Appareil de travail selon la revendication 1,
**caractérisé en ce que** les saillies (23, 24) sont formées d'une seule pièce avec le boîtier, fabriqué en matière plastique, de l'unité de base (2).

11. Appareil de travail selon la revendication 1,
**caractérisé en ce que** l'élément de fixation (20) est une vis (38) qui pénètre avec une section filetée (39) dans le matériau de l'unité de base (2).

12. Appareil de travail selon la revendication 1,
**caractérisé en ce que** l'élément de fixation (20) est un rivet.
